# EUROPÄISCHE PATENTANMELDUNG

(11) **EP 0 611 531 A1**
(43) Veröffentlichungstag der Anmeldung: **24.08.1994**
(21) Anmeldenummer: 93117416.3
(22) Anmeldetag: 27.10.1993
(51) Int. Cl.: A44B 11/02, A44B 21/00

(54) **Befestigungselement zur Befestigung von Gurten, Bändern oder Schlaufen an Kanten von flachen Werkstücken**

(30) Priorität: 19.02.1993 DE 9302461 U; 25.05.1993 DE 9307904 U
(71) Anmelder: FRANK INNOVATION GmbH, D-40822 Mettmann (DE)
(72) Erfinder: Arndt, Johannes Tech.Zentrum Wuppertal, D 42287 Wuppertal (DE)
(74) Vertreter: Laufhütte, Dieter, Dr.-Ing.

(57) **Zusammenfassung**

Die Erfindung betrifft ein Befestigungselement zur Befestigung von Gurten, Bändern oder Schlaufen an Kanten von flachen Werkstücken, insbesondere Isomatten.

Um Gurte, Bänder und Schlaufen in einfacher Weise an der Kante von Werkstücken befestigen zu können, wobei gleichzeitig die Kante geschützt ist, besteht ein Befestigungselement aus einem Mittelteil (12) und zwei beweglich an diesen angelenkten Seitenteilen (14,16). Im Mittelteil (12) oder an das Mittelteil anschließend ist mindestens eine schlitzförmige Ausnehmung (18) zur Aufnahme des Gurtes, Bandes oder der Schlaufe angeordnet. Schließlich ist das Befestigungselement über die Seitenteile mit dem flachen Werkstück verbindbar.

## Beschreibung

Die Erfindung betrifft ein Befestigungselement zur Befestigung von Gurten, Bändern oder Schlaufen an Kanten von flachen Werkstücken, insbesondere Isomatten.

Isomatten bestehen in der Regel aus Schaumstoff. Zum Transport werden sie zusammengerollt und üblicherweise von Gurten, insbesondere aus flexiblen und dehnbaren Materialien, zusammengehalten. Dabei kommt es aufgrund der Anpreßkraft der flexiblen Gurte an der Stoßstelle der zusammengerollten Isomatte zu Druckstellen oder gar zu Beschädigungen, die das Aussehen oder gar die Funktion der Isomatte beeinträchtigen.

Aufgabe der Erfindung ist es daher, ein Befestigungelement an die Hand zu geben, mit dem Gurte, Bänder oder Schlaufen in einfacher Weise an der Kante, beispielsweise einer Isomatte befestigt werden können, wobei gleichzeitig die Kante geschützt ist.

Erfindungsgemäß besteht ein Befestigungselement, das diese Aufgabe löst, aus einem Mittelteil und zwei beweglichen an diesem angelenkten Seitenteilen. Im Mittelteil ist eine schlitzförmige Ausnehmung zur Aufnahme des Gurtes, Bandes oder der Schlaufe angeordnet. Über die Seitenteile ist das Befestigungselement mit dem flachen Werkstück verbindbar. Dabei liegt das Mittelteil parallel zur Kante des flachen Werkstücks, während die beiden Seitenteile das flache Werkstück jeweils übergreifen.

Das Befestigungselement ist mit dem flachen Werkstück in verschiedener Art und Weise befestigbar. Gemäß einer vorteilhaften Ausführungsform ist an einem Seitenteil mindestens ein Rastbolzen angeordnet, der mit einem entsprechenden Hohlzylinder an dem Seitenteil verrastbar ist. Gemäß einer alternativen Ausführungsform können an beiden Seitenteilen Widerhakenelemente angeordnet sein, die sich beispielsweise in den Schaumstoff einer Isomatte bohren und dort aufgrund der Hakenform verhaken. Alternativ dazu kann das Befestigungselement auch oberflächlich mit der Oberfläche des flachen Werkstücks verklebt werden.

Zusätzlich können an beiden Seitenteilen Fixierspitzen, beispielsweise als Metallnadeln, angeordnet sein. Die Seitenteile können über flexible Filmscharniere an dem Mittelteil angelenkt sein. Dies hat den Vorteil, daß das Befestigungselement bei flachen Werkstücken verschiedener Dicke angewandt werden kann.

Zusätzlich kann am Mittelteil ein stangenförmiges Element flexibel angelenkt sein. Um dieses kann eine Schlaufe des zu befestigenden Gurtes oder Bandes gelegt werden. Die Schlaufe ist durch das stangenförmige Element so verdickt, daß diese nicht mehr durch die schlitzförmige Ausnehmung im Mittelteil rutschen kann.

In einer alternativen Ausführungsform ist der Mittelteil als Steg ausgebildet. Neben diesem Steg sind seitlich dann zwei schlitzförmige Ausnehmungen vorgesehen, so daß der Gurt, das Band oder die Schlaufe durch diese Ausnehmungen um den das Mittelteil bildenden Steg geführt werden können.

In vorteilhafter Weise besteht das Befestigungselement aus Kunststoff. So kann es in einfacher Weise als Kunststoffspritzteil hergestellt werden.

Weitere Einzelheiten und Vorteile werden anhand mehrerer in der Zeichnung dargestellter Ausführungsbeispiele näher erläutert. Es zeigen:
- Fig. 1:: drei Ansichten einer ersten Ausführungsform des erfindungsgemäßen Befestigungselements,
- Fig. 2a) u. 2b):: die Ausführungsform gemäß Fig. 1 in Schnittdarstellung und
- Fig. 3:: drei Ansichten einer weiteren Ausführungsform des erfindungsgemäßen Befestigungselements,
- Fig. 4a) u. 4b):: zwei Schnittdarstellungen der Ausführungsform gemaß Fig. 3,
- Fig. 5:: eine Draufsicht, einer Vorderansicht und einen Schnitt einer dritten Ausführungsform des erfindungsgemäßen Befestigungselements und
- Fig. 6:: eine perspektivische Ansicht einer alternativen Ausführungsform des erfindungsgemäßen Befestigungselements.

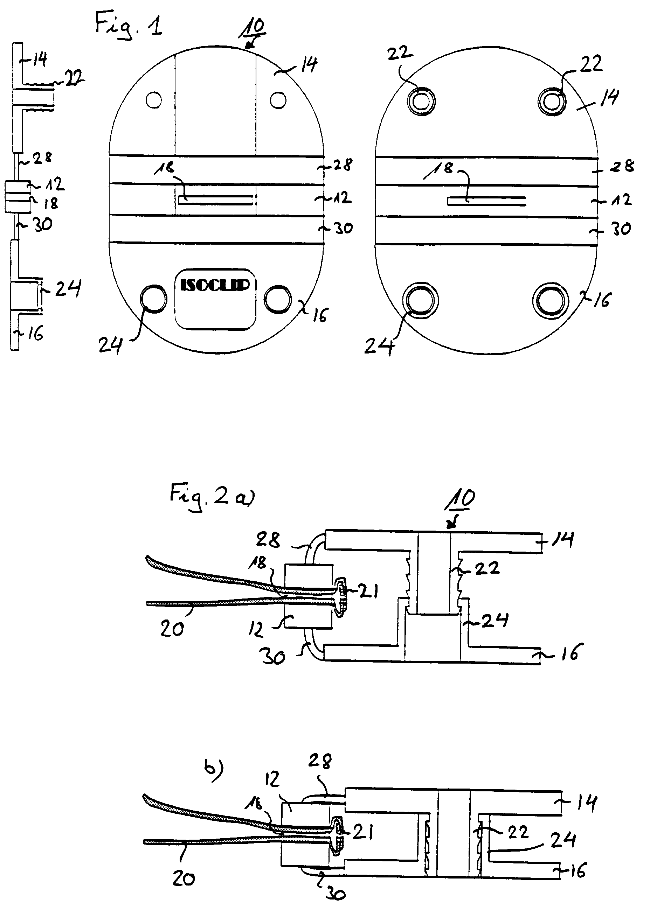

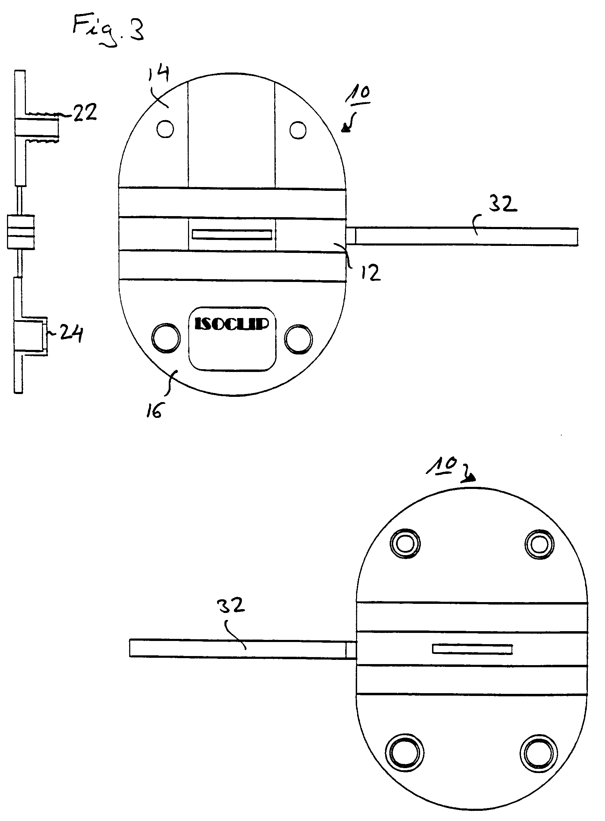

Das in Fig. 1 dargestellte Befestigungselement weist ein Mittelteil 12 auf, an welches über flexible Filmscharniere 28 bzw. 30 Seitenteile 14 bzw. 16 angelenkt sind. Im mittleren Bereich des Mittelteils 12 ist eine schlitzförmige Ausnehmung 18 vorgesehen. An dem Seitenteil 14 sind zwei Rastbolzen 22 angeformt. An dem Seitenteil 16 sind zwei entsprechende Hohlzylinder 24, die zur Aufnahme der Rastbolzen 22 dienen, angeformt.

In den Fig. 2a) und 2b) ist dargestellt, wie die Rastbolzen 22 mit ihren entsprechenden rundlaufenden Zähnen in eine vorspringende Kante der jeweiligen Hohlzylinder 24 einrasten. Durch diese Rastbolzenanordnung kann das Befestigungselement 10 in sehr einfacher Art und Weise an die Dicke von verschiedenen Isomatten angepaßt werden. Wie aus den Fig. 2a) und 2b) ersichtlich, ist bei der Dickenanpassung auch das Vorsehen der flexiblen Filmscharniere 28 bzw. 30 wesentlich.

In der in Fig. 2a) dargestellten Art und Weise ist eine Schlaufe eines flexiblen und dehnbaren Befestigungsgurtes durch den Schlitz 18 gesteckt. Dieser wird an einem Herausrutschen aus dem Schlitz dadurch gehindert, daß die Enden des Bandes miteinander vernäht sind und dadurch eine Verdickung 21 bilden.

Die in den Fig. 3 und 4a) und 4b) dargestellte Ausführungsform entspricht weitgehend der zuvor beschriebenen Ausführungsform. Daher sind gleiche Teile mit gleichen Bezugszeichen gekennzeichnet. Bei dieser Ausführungsform ist aber zusätzlich noch ein stangenförmiges Element 32 verschwenkbar angelenkt, welches, wie in den Fig. 4a) und 4b) dargestellt, durch die Schlaufe eines entsprechenden flexiblen Bandes gelegt werden kann. Dadurch ist die Schlaufe am Durchrutschen durch die Ausnehmung 18 gehindert.

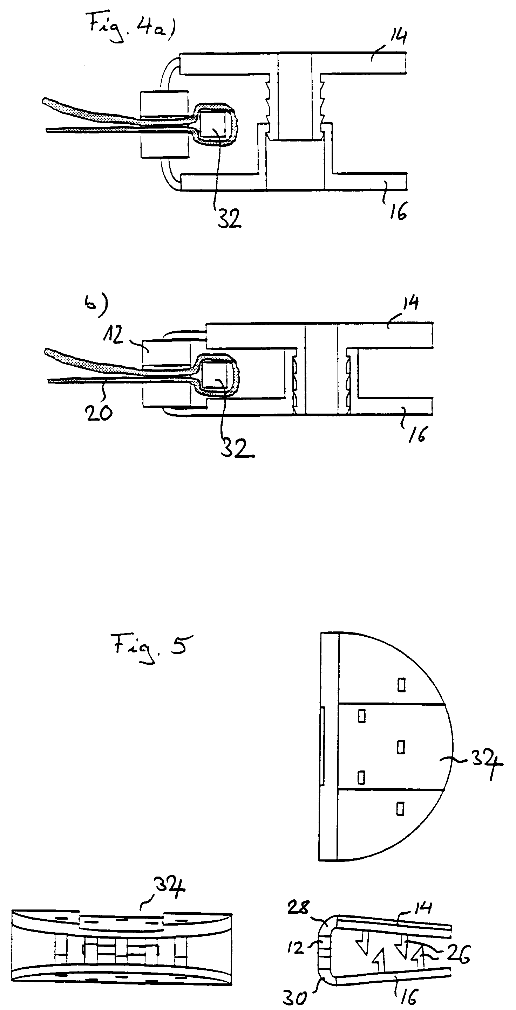

In der Ausführungsform gemäß Fig. 5 sind an den Seitenteilen Widerhakenelemente 26 angeformt, die sich beispielsweise im Schaumstoff einer Isomatte verhaken und dadurch das Befestigungselement festlegen. Auf der Oberfläche eines der Seitenteile kann eine entsprechende Ausnehmung 34 vorgesehen sein, in der im montierten Zustand das flexible Band 20 liegt.

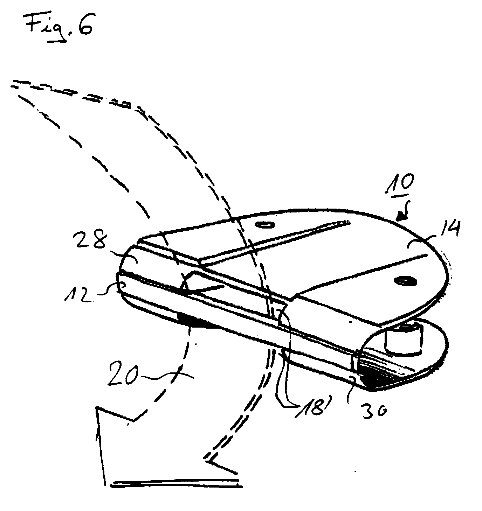

In Fig. 6 ist eine alternative Ausführungsform gezeigt, bei dem das Mittelteil aus einem Steg 12 besteht, an dem sich beidseitig Schlitze 18' anschließen. Durch diese Schlitze 18' wird das Band 20, das hier durch den gestrichelten Pfeil dargestellt ist, gezogen. Die Schlitze 18' werden einerseits von dem Steg 12 und andererseits von den Filmscharnieren 28 bzw. 30 umgrenzt, wie dies in Fig. 6 dargestellt ist.

## Patentansprüche

1. Befestigungselement zur Befestigung von Gurten, Bändern oder Schlaufen an Kanten von flachen Werkstücken, insbesondere Iso-Matten,
**dadurch gekennzeichnet,**
daß es aus einem Mittelteil (12) und zwei beweglich an diesen angelenkten Seitenteilen (14, 16) besteht,
daß im Mittelteil oder an das Mittelteil anschließend mindestens eine schlitzförmige Ausnehmung (18, 18') zur Aufnahme des Gurtes, Bandes oder der Schlaufe (20) angeordnet ist, und
daß es über die Seitenteile (14, 16) mit dem flachen Werkstück verbindbar ist.

2. Befestigungselement nach Anspruch 1, dadurch gekennzeichnet, daß an einem Seitenteil (14) mindestens ein Rastbolzen (22) angeordnet ist, der mit einem entsprechenden Hohlzylinder (24) an dem Seitenteil (16) verrastbar ist.

3. Befestigungselement nach Anspruch 1 oder 2, dadurch gekennzeichnet, daß an beiden Seitenteilen (14, 16) Widerhakenelemente (26) angeordnet sind.

4. Befestigungselement nach einem der Ansprüche 1 bis 3, dadurch gekennzeichnet, daß an beiden Seitenteilen (14, 16) zusätzliche Fixierspitzen angeordnet sind.

5. Befestigungselement nach einem der Ansprüche 1 bis 4, dadurch gekennzeichnet, daß die Seitenteile (14, 16) über flexible Filmscharniere (28, 30) an dem Mitteilteil (12) angelenkt sind.

6. Befestigungselement nach einem der Ansprüche 1 bis 5, dadurch gekennzeichnet, daß am Mittelteil zusätzlich ein stangenförmiges Element (32) angelenkt ist, um das der Gurt, das Band oder die Schlaufe legbar ist.

7. Befestigungselement nach einem der Ansprüche 1 bis 5, dadurch gekennzeichnet, daß das Mittelteil (12) aus einem Steg besteht, an den sich seitlich zwei schlitzförmige Ausnehmungen (18') anschließen.

8. Befestigungselement nach einem der Ansprüche 1 bis 7, dadurch gekennzeichnet, daß es aus Kunststoff besteht.
